# EUROPÄISCHE PATENTSCHRIFT

(11) **EP 2 881 812 B1**
(45) Veröffentlichungstag und Bekanntmachung des Hinweises auf die Patenterteilung: **31.08.2016**
(21) Anmeldenummer: 13195546.0
(22) Anmeldetag: 03.12.2013
(51) Int. Cl.: G05B 9/03, G05B 19/042, H04L 12/437

(54) **Verfahren zum Betreiben einer Automatisierungseinrichtung**
Method for operating an automation device
Procédé de fonctionnement d'un dispositif d'automatisation

(43) Veröffentlichungstag der Anmeldung: 10.06.2015
(73) Patentinhaber: Siemens Aktiengesellschaft, 80333 München (DE)
(72) Erfinder: Grosch, Thomas, 90574 Roßtal (DE); Laforsch, Jürgen, 77815 Bühl (DE); Renschler, Albert, 76275 Ettlingen (DE)

(56) Entgegenhaltungen:
- EP-A1- 2 034 668
- EP-A1- 2 224 642
- DE-A1- 4 242 438
- Siemens: "S7-CPs für Industrial Ethernet Projektieren und in Betrieb nehmen" In: "S7-CPs für Industrial Ethernet Projektieren und in Betrieb nehmen", 31. Mai 2008 (2008-05-31), Siemens, Nuernberg, Deutschland, XP055113567, * Kapitel 3.6.2;3.6.3; *
- Melanie Feldmann: "Doppelt gesendet hält besser", , 10. Juni 2013 (2013-06-10), XP055113447, www.all-electronics.de Gefunden im Internet: URL:http://www.all-electronics.de/texte/an zeigen/50688/Doppelt-gesendet-haelt-besser [gefunden am 2014-04-10]

## Beschreibung

Die Erfindung betrifft ein Verfahren zum Betreiben einer Automatisierungseinrichtung, deren CPU-Modul dazu ausgebildet ist, lesend oder schreibend auf dezentrale Peripherien zuzugreifen, die jeweils mit zwei Interface-Modulen versehen sind, welche jeweils mit einer Ein-/Ausgabe-Steuerung ringförmig verkabelt sind, wobei Peripherie-Zugriffe über einen der Ringe oder über beide Ringe ausgeführt werden, und wobei mittels eines für jeden Ring vorgesehenen Redundanz-Managers in einem Normalbetrieb der jeweilige Ring logisch unterbrochen wird und im Falle einer physikalischen Ringunterbrechung eine Ring-Rekonfiguration für diesen Ring eingeleitet wird. Darüber hinaus betrifft die Erfindung eine Automatisierungseinrichtung zur Durchführung des Verfahrens.

Ein derartiges Verfahren sowie eine derartige Automatisierungseinrichtung sind im Umfeld der Automatisierungstechnik bekannt, wobei zur Erhöhung der Verfügbarkeit der Kommunikationsverbindung zwischen den Ein-/Ausgabesteuerungen (I/O-Controller) eines Automatisierungsgerätes und den dezentralen Peripheriegeräten (dezentrale Peripherie, I/O-Devices) diese Verbindung redundant ausgeführt und ferner ein so genanntes Media Redundancy Protocol (MRP) vorgesehen ist. Im Normalbetrieb unterbricht der jeweilige Redundanz- bzw. ein jeweiliger MRP-Manager logisch den jeweiligen Ring, wobei der Redundanz-Manager Bestandteil der jeweiligen Ein-/Ausgabesteuerung sein kann und zwei Schnittstellen (zwei Ports) zur Datenübertragung aufweist. Durch die logische Ringunterbrechung wird verhindert, dass die von dem CPU-Modul des Automatisierungsgerätes den Peripheriegeräten übermittelten Informationen, z. B. Telegramme, Pakete oder Daten, im jeweiligen Ring beispielsweise aufgrund einer fehlerhaften Peripherieadresse kreisen. Dies bedeutet, dass aufgrund der jeweiligen Ringunterbrechung die jeweilige Ringverkabelung logisch eine Linienstruktur repräsentiert.

Es kann nun vorkommen, dass beispielsweise zwischen zwei Peripheriegeräten eine der Ringverkabelungen physikalisch unterbrochen oder eines der Peripheriegeräte ausgefallen ist, und daher der Redundanz-Manager die über einen Port dem Ring zugeführten Testinformationen an seinem anderen Port nicht mehr empfangen kann. In diesem Fall leitet der Redundanz-Manager eine Rekonfiguration des Kommunikationsweges ein, indem er den Peripheriegeräten die geänderte Topologie bzw. die geänderte Linienstruktur anzeigt. Der Redundanz-Manager übermittelt dann über beide Schnittstellen bzw. über beide Ports die Informationen, was bedeutet, dass die Informationen in entgegengesetzten Richtungen übertragen werden. Während einer so genannten Totzeit, welche die Zeitdauer dieser Ring-Rekonfiguration bzw. die Zeitdauer des "Einlernens" im Hinblick auf die neue Linienstruktur repräsentiert, kann das CPU-Modul nicht auf die Peripheriegeräte lesend oder schreibend zugreifen, was sich störend auf die Steuerung eines zu steuernden technischen Prozesses auswirkt.

EP 2 224 642 A1 offenbart ein Kommunikationssystem und ein Kommunikationsverfahren zur zuverlässigen Kommunikation mit Kommunikationsteilnehmern, wobei eine schnelle Wiederaufnahme der Kommunikation von Feldgeräten mit Feldbus-Mastern ermöglicht wird.

EP 2 034 668 A1 beschreibt ein hochverfügbares Kommunikationssystem mit einer einen Primär- und einen Backup-Kanal aufweisenden Kommunikationsverbindung.

Der Erfindung liegt daher die Aufgabe zugrunde, ein Verfahren der eingangs genannten Art anzugeben, mittels welchem aufgrund einer physikalischen Unterbrechung der Ringverdrahtung oder aufgrund eines ausgefallen Gerätes die Totzeit vermindert wird. Darüber hinaus ist eine Automatisierungseinrichtung zu schaffen, welche zur Durchführung des Verfahrens geeignet ist.

Diese Aufgabe wird im Hinblick auf das Verfahren durch die im Anspruch 1 angegebenen, bezüglich der Automatisierungseinrichtung durch die im Anspruch 4 angegebenen Maßnahmen gelöst.

Vorteilhaft ist, dass insbesondere in einer Automatisierungseinrichtung mit einem großen Mengengerüst, d. h. mit einer Vielzahl von Peripheriegeräten, in welcher aufgrund von einer oder mehreren Ring-Rekonfigurationen gewöhnlich mit langen Totzeiten zu rechnen ist, das CPU-Modul bereits während dieser Ring-Rekonfiguration auf die Peripheriegeräte lesend oder schreibend zugreifen kann.
In einer Ausgestaltung der Erfindung ist vorgesehen, dass z. B. ein Anwender im Rahmen einer Projektierung für die dezentralen Peripherien vorgibt, ob im Falle der physikalischen Ringunterbrechung die Peripherie-Zugriffe über den anderen Ring ausgeführt werden. Beispielsweise gibt der Anwender vor, dass Peripheriezugriffe über den anderen Ring nur für "zeitkritische" Peripherien erfolgen sollen.

In einer weiteren Ausgestaltung der Erfindung wird eine hochverfügbare Automatisierungseinrichtung verwirklicht. Diese weist zwei Automatisierungsgeräte auf, die jeweils ein CPU-Modul und zwei Ein-/Ausgabe-Steuerungen aufweisen, wobei diese Ein-/Ausgabe-Steuerungen jeweils mit einem der Interface-Module der dezentralen Peripherien ringförmig verkabelt sind. Eines dieser Automatisierungsgeräte ist im Hinblick auf die Peripheriezugriffe führend, was bedeutet, dass Prozessausgangswerte bzw. Schreibzugriffe nur von einem der beiden Automatisierungsgeräte bewerkstelligt werden. Nur für den Fall, dass das eine Automatisierungsgerät ausfällt, übernimmt das andere Automatisierungsgerät die Steuerung des technischen Prozesses und führt die Peripheriezugriffe aus.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
Figur 1 eine Automatisierungseinrichtung und
Figur 2 eine logische Verbindungsstruktur.

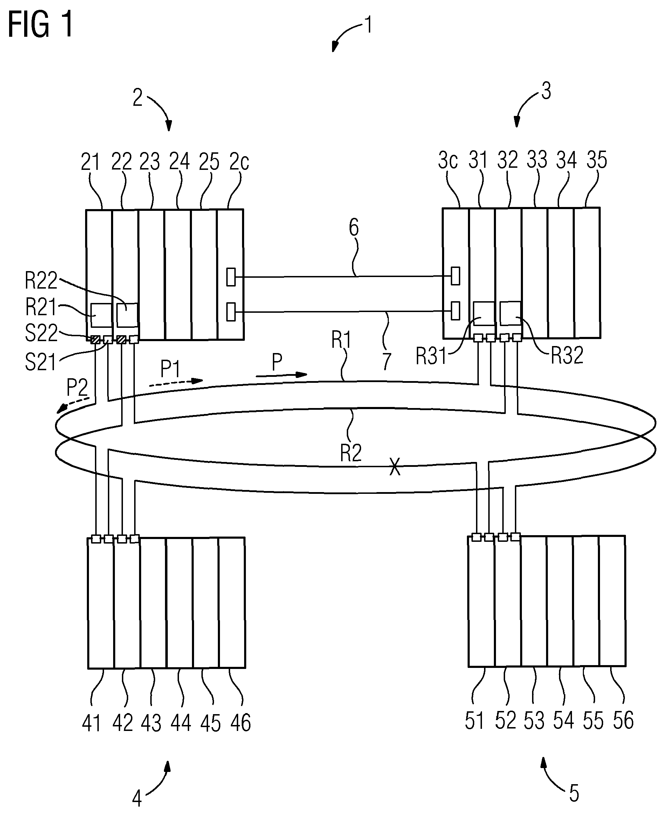

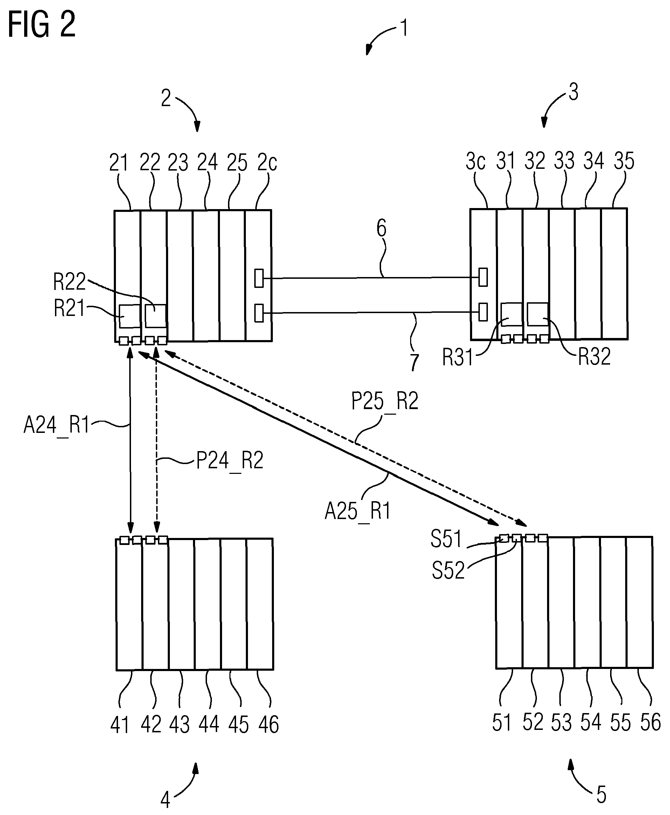

Die in den Figuren 1 und 2 gleichen Teile sind mit gleichen Bezugszeichen versehen.

In Figur 1 sind in vereinfachter Form Bestandteile einer hochverfügbaren Automatisierungseinrichtung 1 dargestellt. Diese Automatisierungseinrichtung 1 ist zur Steuerung eines technischen Prozesses bzw. einer technischen Anlage vorgesehen und weist ein erstes und ein zweites Automatisierungsgerät 2, 3 sowie zwei dezentrale Peripherien bzw. Peripheriegeräte 4, 5 auf, die mit den Automatisierungsgeräten 2, 3 ringförmig verkabelt sind. Die Automatisierungsgeräte 2, 3 sind jeweils versehen mit einem CPU-Modul 2c, 3c, zwei Ein-/Ausgabesteuerungen bzw. Master-Modulen 21, 22, 31, 32, die jeweils ringförmig über Ringe R1, R2 mit jeweils einem von zwei Interface-Modulen 41, 42 der Peripherie 4 und einem von zwei Interface-Modulen 51, 52 der Peripherie 5 verkabelt sind. Die ringförmige Verkabelung wird über entsprechende Schnittstellen (Ports) der Ein-/Ausgabesteuerungen 21, 22, 31, 32 und der Interface-Module 41, 42, 51, 52 bewerkstelligt, wobei dazu jede dieser Ein-/Ausgabesteuerungen 21, 22, 31, 32 und jedes dieser Interface-Module 41, 42, 51, 52 zwei Schnittstellen zum Anschließen entweder an den Ring R1 oder an den Ring R2 aufweist. Dies bedeutet, dass jeweils eine Schnittstelle für eine eingehende und jeweils eine Schnittstelle für eine abgehende Verbindung des Rings R1 oder des Rings R2 vorgesehen ist. Im vorliegenden Beispiel sind zur Verdeutlichung die beiden Schnittstellen der Ein-/Ausgabesteuerung 21 mit S21, S22 bezeichnet, wobei z. B. Informationen von der Schnittstelle S21 zur Schnittstelle S22 im Uhrzeigersinn übertragen werden, was in der Zeichnung mittels eines Pfeiles P angedeutet ist. Über diese Interface-Module 41, 42, 51, 52 können die CPU-Module 2, 3 lesend oder schreibend auf weitere Module 43 bis 46, 53 bis 56 der dezentralen Peripherien 4, 5 zugreifen, beispielsweise weitere Module in Form von Analog- und/oder Digitalein/-ausgabe-Modulen. Selbstverständlich weisen die Automatisierungsgeräte 2, 3 weitere Module auf, z. B. Module 23, 24, 25, 33, 34, 35, die ausgebildet sein können als Analog- und/oder Digitalein/-ausgabe-Module, als Kommunikations-Module oder als weitere für den Betrieb des jeweiligen Automatisierungsgerätes 2, 3 geeignete Module. Darüber hinaus kann selbstverständlich das jeweilige CPU-Modul 2c, 3c dazu ausgebildet sein, die Aufgaben der zwei Ein-/Ausgabesteuerungen bzw. Master-Module 21, 22, 31, 32 zu übernehmen, was allerdings eine höhere Belastung dieser CPU-Module 2c, 3c bedeutet.
Im Folgenden wird angenommen, dass das Automatisierungsgerät 2 als Master-Automatisierungsgerät betrieben wird und daher im Hinblick auf die Steuerung des technischen Prozesses (Prozesssteuerung) führend ist. Das Automatisierungsgerät 3 dagegen arbeitet als Reserve-Automatisierungsgerät, wobei im Hinblick auf die Prozesssteuerung beide Automatisierungsgeräte 2, 3 das gleiche Steuerprogramm verarbeiten, allerdings Zugriffe auf die Peripherie 4, 5 nur vom Master-Automatisierungsgerät 2 erfolgen. Das Automatisierungsgerät 3 greift nur dann auf die Peripherie 4, 5 lesend oder schreibend zu, falls das Automatisierungsgerät 2 ausgefallen ist, was dem Automatisierungsgerät 3 über Synchronisationsleitungen 6, 7 angezeigt wird. In diesem Fall übernimmt das Automatisierungsgerät 3 im Hinblick auf die Prozesssteuerung die Masterschaft.

Für jeden der Ringe R1, R2 der Automatisierungseinrichtung 1 ist mindestens ein Redundanz-Manager vorgesehen. Im vorliegenden Ausführungsbeispiel weist die Automatisierungseinrichtung 1 Redundanz-Manager R21, R22, R31, R32 auf, welche Bestandteil der jeweiligen Ein-/Ausgabesteuerung 21, 22, 31, 32 des Master- und des Reserve-Automatisierungsgerätes 2, 3 sind. Der Redundanz-Manager R21 des Master-Automatisierungsgerätes 2 unterbricht logisch den Ring R1 und der Redundanz-Manager R22 logisch den Ring R2, was in der Zeichnung mittels schraffierter Quadrate verdeutlicht ist. Aufgrund dieser logischen Unterbrechungen der Ringe R1, R2 werden logisch zwei Linienstrukturen geschaffen. Die Redundanz-Manager R31, R32 des Reserve-Automatisierungsgerätes 3 schließen die Ringe R1, R2 logisch kurz, wodurch die über die Ringe R1, R2 zu übermittelnden Informationen weitergeleitet werden können. Diese Redundanz-Manager R31, R32 unterbrechen nur dann logisch die Ringe R1, R2, falls das Automatisierungsgerät 3 nach einem Ausfall des Automatisierungsgerätes 2 die Masterschaft übernommen hat.

Im Folgenden wird angenommen, dass das CPU-Modul 2c des Automatisierungsgerätes 2 auf die Peripherie 4, 5 über die Ein-/Ausgabesteuerung 21, den Ring R1 und die Interface-Module 41, 51 zugreift, was bedeutet, dass nur die über den Ring R1 übertragenen Informationen bzw. Daten als gültig angesehen werden. Dass die über den Ring R1 übertragenen Daten als gültig bewertet werden, zeigt die Ein-/Ausgabesteuerung 21 diesen Interface-Modulen 41, 51 über eine dafür vorgesehene Kennung in den über den Ring R1 übermittelten Daten bzw. Datenstrom an. Die über den Ring R2 übertragenen Daten werden dagegen als ungültig bewertet, was die Ein-/Ausgabesteuerung 22 diesen Interface-Modulen 42, 52 ebenfalls über eine dafür vorgesehene Kennung in den über diesen Ring R2 übermittelten Daten anzeigt. Ferner übermittelt der Redundanz-Manager R21 in vorgegebenen Zeitabständen beispielsweise über die Schnittstelle S21 der Ein-/Ausgabesteuerung 21 und über den Ring R1 Testdaten, mittels derer der Redundanz-Manager R21 die Durchgängigkeit des Ringes R1 prüft.
Für den Fall, dass die Schnittstelle S22 der Ein-/Ausgabesteuerung 21 diese Testdaten empfängt, so weist dies darauf hin, dass die Verbindung noch aktiv ist, was bedeutet, dass der Ring R1 physikalisch nicht unterbrochen ist. In der gleichen Art und Weise überprüft der Redundanz-Manager R22 die Durchgängigkeit des Ringes R2, wobei im Folgenden davon ausgegangen wird, dass der Ring R2 nicht unterbrochen ist.

Für den Fall dagegen, dass der Ring R1 physikalisch unterbrochen ist, z. B. aufgrund eines Drahtbruchs an einer in der Zeichnung mit X gekennzeichneten Stelle, werden an der Schnittstelle S22 die Testdaten nicht empfangen, was auf eine physikalische Ringunterbrechung hinweist. In diesem Fall leitet der Redundanz-Manager R21 des Automatisierungsgerätes 2 eine Ring-Rekonfiguration ein, wobei unmittelbar der Redundanz-Manager R21, die Ein-/Ausgabesteuerung 21 oder das CPU-Modul 2c die Ein-/Ausgabesteuerung 22 aktiviert. Aufgrund dieser Aktivierung erfolgen die folgenden Peripherie-Zugriffe über die Ein-/Ausgabesteuerung 22, den Ring R2 und die Interface-Module 42, 52, d. h. die über den Ring R2 übertragenen Daten werden im Hinblick auf eine weitere Verarbeitung als gültig angesehen. Dass diese nun über den Ring R2 übermittelten Daten gültig sind, zeigt die Ein-/Ausgabesteuerung 22 den Interface-Modulen 42, 52 wiederum über eine dafür vorgesehene Kennung in den über den Ring R2 übermittelten Daten bzw. Datenstrom an. Die über den Ring R1 übertragenen Daten werden dagegen als ungültig bewertet, was die Ein-/Ausgabesteuerung 21 den Interface-Modulen 41, 51 ebenfalls über eine dafür vorgesehene Kennung in den über diesen Ring R1 übermittelten Daten anzeigt. Aufgrund des derart ermöglichten Peripheriezugriffs über den Ring R2 während bzw. vor einer Beendigung der Rekonfiguration des Rings R1 wird die Totzeit verkürzt.

Während der über den Ring R2 auszuführenden Peripherie-Zugriffe rekonfiguriert der Redundanz-Manager R21 den Ring R1, was - wie erläutert - bedeutet, dass in an sich bekannter Art und Weise der Redundanz-Manager R21 das Automatisierungsgerät 3 und die Peripheriegeräte 4, 5 im Hinblick auf die neue Linienstruktur "einlernt". Diesen Geräten 3, 4, 5 wird dadurch angezeigt, dass bezüglich des Rings R1 die Zugriffe in entgegengesetzten Richtungen erfolgen, was in der Zeichnung mit gestrichelten Pfeilen P1, P2 angedeutet ist.

Ob nach der Ringrekonfiguration des Rings R1 die über die neue Linienstruktur in Richtung P1 und P2 (neue Verbindung über Linienstruktur "aktiv") übertragenen Daten oder die über den Ring R2 (Verbindung über Ring 2 "aktiv") übertragenen Daten als gültig zu bewerten sind, wird wiederum in der beschriebenen Art und Weise den Geräten 3, 4, 5 mittels einer entsprechenden Kennung im zu übermittelnden Datenstrom angezeigt.

In Figur 2 ist die logische Struktur der Verbindungen der Automatisierungseinrichtung gemäß Figur 1 dargestellt. Wie beschrieben, erfolgen mittels des CPU-Moduls 2c des Master-Automatisierungsgerätes 2 die Zugriffe auf die Peripherien 4, 5 über den Ring R1, falls dieser Ring R1 nicht unterbrochen ist. Die Zugriffe erfolgen über aktive Verbindungen A24_R1, A25_R1 zwischen der Ein-/Ausgabesteuerung 21 und dem Interface-Modul 41 der Peripherie 4 einerseits und dem Interface-Modul 51 der Peripherie 5 andererseits. Für den Fall, dass der Ring R1 unterbrochen wird, werden die aktiven Verbindungen A24_R1, A25_R1 deaktiviert und passive Verbindungen P24_R2, P25_R2 zwischen der Ein-/Ausgabesteuerung 22 und dem Interface-Modul 42 der Peripherie 4 einerseits und dem Interface-Modul 52 der Peripherie 5 andererseits aktiviert. Mit anderen Worten: es werden aktive Verbindungen auf passive und passive Verbindungen auf aktive umgeschaltet, wodurch der Zugriff des CPU-Moduls 2c auf die Peripherie 4, 5 über den Ring R2 ermöglicht wird. Im vorliegenden Ausführungsbeispiel sind lediglich zwei dezentrale Peripherien 4, 5 dargestellt. Selbstverständlich kann die Automatisierungseinrichtung 1 eine Vielzahl von dezentralen Peripherien aufweisen, von denen z. B die Hälfte mit dem Ring R1 und die andere Hälfte mit dem Ring R2 verbunden sind. Falls z. B. der Ring R2 ausfällt, muss nur die Hälfte aller Peripherien auf den Ring R1 umgeschaltet werden, die Zugriffe auf alle Peripherien können über den Ring R1 erfolgen. Ferner kann ein Anwender im Rahmen einer Projektierung vorgeben, welche der Peripherien im Falle einer Ringunterbrechung überhaupt umgeschaltet werden sollen. Beispielsweise gibt der Anwender vor, dass Peripheriezugriffe über den Ring R1 nur für "zeitkritische" Peripherien zu erfolgen haben.

## Patentansprüche

1. Verfahren zum Betreiben einer Automatisierungseinrichtung, deren CPU-Modul (2c; 3c) dazu ausgebildet ist, lesend oder schreibend auf dezentrale Peripherien (4, 5) zuzugreifen, die jeweils mit zwei Interface-Modulen (41, 42, 51, 52) versehen sind, welche jeweils mit einer Ein-/Ausgabe-Steuerung (21, 22; 31, 32) ringförmig verkabelt sind, wobei Peripherie-Zugriffe über einen der Ringe (R1, R2) oder über beide Ringe (R1, R2) ausgeführt werden, und wobei mittels eines für jeden Ring (R1, R2) vorgesehenen Redundanz-Managers (R21, R22; R31, R32) in einem Normalbetrieb der jeweilige Ring (R1, R2) logisch unterbrochen wird und im Falle einer physikalischen Ringunterbrechung eine Ring-Rekonfiguration für diesen Ring (R1, R2) eingeleitet wird, wobei für den Fall, dass für einen der Ringe (R1) die Ring-Rekonfiguration eingeleitet wird, die Peripherie-Zugriffe für mindestens eine der dezentralen Peripherien (4, 5) über den anderen Ring (R2) ausgeführt werden.

2. Verfahren nach Anspruch 1, **dadurch gekennzeichnet, dass** im Rahmen einer Projektierung für die dezentralen Peripherien (4, 5) vorgegeben wird, ob im Falle der physikalischen Ringunterbrechung die Peripherie-Zugriffe über den anderen Ring (R2) ausgeführt werden.

3. Verfahren nach Anspruch 1 oder 2, **dadurch gekennzeichnet, dass**
- das CPU-Modul (2c) und die beiden Ein-/Ausgabe-Steuerungen (21, 22) als Bestandteil eines ersten Automatisierungsgerätes (2) konfiguriert werden,
- ein weiteres CPU-Modul (3c) und zwei weitere Ein-/Ausgabe-Steuerungen (31, 32) als Bestandteil eines zweiten Automatisierungsgerätes (3) konfiguriert werden, und
- jeweils eine der weiteren Ein-/Ausgabe-Steuerungen (31, 32) des zweiten Automatisierungsgerätes (3) mit jeweils einem der Interface-Module (41, 42, 51, 52) der dezentralen Peripherien (4, 5) und mit jeweils einer der Ein-/ Ausgabe-Steuerungen (21, 22) des ersten Automatisierungsgerätes (2) ringförmig verkabelt werden.

4. Automatisierungseinrichtung mit
- dezentralen Peripherien (4, 5), die jeweils mit zwei Interface-Modulen (41, 42, 51, 52) versehen sind,
- einem CPU-Modul (2c; 3c), welches dazu ausgebildet ist, lesend oder schreibend auf die dezentralen Peripherien (4, 5) zuzugreifen,
- mindestens zwei Ein-/Ausgabe-Steuerungen (21, 22; 31, 32), die jeweils mit einem der Interface-Module (41, 42, 51, 52) der dezentralen Peripherien (4, 5) ringförmig verkabelt sind, wobei das CPU-Modul (2c; 3c) die Peripherie-Zugriffe über einen dieser Ringe (R1, R2) oder über beide Ringe (R1, R2) ausführt,
- einem Redundanz-Manager (R21, R22; R31, R32) für jeden Ring (R1, R2), der in einem Normalbetrieb den jeweiligen Ring (R1, R2) logisch unterbricht und ferner dazu ausgebildet ist, im Falle einer physikalischen Ringunterbrechung die logische Unterbrechung zu beheben und eine Ring-Rekonfiguration für diesen Ring (R1, R2) einzuleiten,
wobei die Automatisierungseinrichtung (1) dazu ausgebildet ist, für den Fall, dass die Ring-Rekonfiguration für einen der Ringe (R1) einzuleiten ist, die Peripherie-Zugriffe für mindestens eine der dezentralen Peripherien (4, 5) über den anderen Ring (R2) auszuführen.

5. Automatisierungseinrichtung nach Anspruch 4, **dadurch gekennzeichnet, dass** im Rahmen einer Projektierung ein Anwender für die dezentralen Peripherien (4, 5) vorgibt, ob im Falle der physikalischen Ringunterbrechung die Peripherie-Zugriffe über den anderen Ring (R2) ausgeführt werden.

6. Automatisierungseinrichtung nach Anspruch 4 oder 5, **dadurch gekennzeichnet, dass**
- das CPU-Modul (2c) und die beiden Ein-/Ausgabe-Steuerungen (21, 22) Bestandteil eines ersten Automatisierungsgerätes (2) sind,
- die Automatisierungseinrichtung (1) ein zweites mit einem CPU-Modul (3c) und mit zwei Ein-/Ausgabe-Steuerungen (31, 32) versehenes Automatisierungsgerät (3) aufweist, und
- jeweils eine der weiteren Ein-/Ausgabe-Steuerungen (31, 32) des zweiten Automatisierungsgerätes (3) mit jeweils einem der Interface-Module (41, 42, 51, 52) der dezentralen Peripherien (4, 5) und mit jeweils einer der Ein-/ Ausgabe-Steuerungen (21, 22) des ersten Automatisierungsgerätes ringförmig (2) verkabelt sind.

## Claims

1. Method for operating an automation device, the CPU module (2c; 3c) of which is designed to effect read or write access to local peripherals (4, 5) that are each provided with two interface modules (41, 42, 51, 52) that are each wired up in ring form to an input/output controller (21, 22; 31, 32), wherein peripheral access operations are executed via one of the rings (R1, R2) or via both rings (R1, R2), and wherein a redundancy manager (R21, R22,; R31, R32) that is provided for each ring (R1, R2) is used to logically interrupt the respective ring (R1, R2) in a normal mode and to initiate ring reconfiguration for this ring (R1, R2) in the event of a physical ring interruption, wherein the event of the ring reconfiguration being initiated for one of the rings (R1) the peripheral access operations for at least one of the local peripherals (4, 5) are executed via the other ring (R2).

2. Method according to Claim 1, **characterized in that** project planning for the local peripherals (4, 5) involves prescribing whether in the event of the physical ring interruption the peripheral access operations are executed via the other ring (R2).

3. Method according to Claim 1 or 2, **characterized in that**
- the CPU module (2c) and the two input/output controllers (21, 22) are configured as part of a first automation unit (2),
- a further CPU module (3c) and two further input/output controllers (31, 32) are configured as part of a second automation unit (3), and
- a respective one of the further input/output controllers (31, 32) of the second automation unit (3) is wired up in ring form to a respective one of the interface modules (41, 42, 51, 52) of the local peripherals (4, 5) and to a respective one of the input/output controllers (21, 22) of the first automation unit (2).

4. Automation device having
- local peripherals (4, 5) that are each provided with two interface modules (41, 42, 51, 52),
- a CPU module (2c; 3c) that is designed to effect read or write access to the local peripherals (4, 5),
- at least two input/output controllers (21, 22; 31, 32) that are each wired up in ring form to one of the interface modules (41, 42, 51, 52) of the local peripherals (4, 5), wherein the CPU module (2c; 3c) executes the peripheral access operations via one of these rings (R1, R2) or via both rings (R1, R2),
- a redundancy manager (R21, R22; R31, R32) for each ring (R1, R2), which logically interrupts the respective ring (R1, R2) in a normal mode and is also designed to lift the logical interruption in the event of a physical ring interruption and to initiate ring reconfiguration for this ring (R1, R2),
wherein the automation device (1) is designed such that in the event of the ring reconfiguration needing to be initiated for one of the rings (R1) it executes the peripheral access operations for at least one of the local peripherals (4, 5) via the other ring (R2).

5. Automation device according to Claim 4, **characterized in that** project planning involves a user prescribing for the local peripherals (4, 5) whether in the event of the physical ring interruption the peripheral access operations are executed via the other ring (R2).

6. Automation device according to Claim 4 or 5, **characterized in that**
- the CPU module (2c) and the two input/output controllers (21, 22) are part of a first automation unit (2),
- the automation device (1) has a second automation unit (3) provided with a CPU module (3c) and with two input/output controllers (31, 32), and
- a respective one of the further input/output controllers (31, 32) of the second automation unit (3) is wired up in ring form to a respective one of the interface modules (41, 42, 51, 52) of the local peripherals (4, 5) and to a respective one of the input/output controllers (21, 22) of the first automation unit.

## Revendications

1. Procédé pour faire fonctionner un dispositif d'automatisation dont le module CPU ( 2c ; 3c ) est constitué pour accéder en lecture ou en écriture à des périphéries ( 4, 5 ) décentralisées, qui sont pourvues respectivement de deux modules ( 41, 42, 51, 52 ) d'interface câblés respectivement annulairement à une commande ( 21, 22 ; 31, 32 ) d'entrée/sortie, des accès de périphéries étant réalisés par l'un des anneaux ( R1, R2 ) ou par les deux anneaux ( R1, R2 ) et dans lequel, à l'aide d'un gestionnaire ( R21, R22 ; R31, R32 ) de redondances prévu pour chaque anneau ( R1, R2 ), il s'effectue, dans un fonctionnement normal de l'anneau ( R1, R2 ) respectif, une interruption logique et, dans le cas d'une interruption physique de l'anneau, une reconfiguration de l'anneau pour cet anneau ( R1, R2 ) est lancée, dans lequel, dans le cas où il est lancé pour l'anneau ( R1 ) une reconfiguration d'anneau, les accès aux périphéries pour au moins l'une des périphéries ( 4, 5 ) décentralisées sont réalisés par l'autre anneau ( R2 ).

2. Procédé suivant la revendication 1, **caractérisé en ce que**, dans le cas d'une planification des périphéries ( 4, 5 ) décentralisées, il est prescrit si, dans le cas d'une interruption physique de l'anneau, les accès aux périphéries sont réalisés par l'autre anneau ( R2 ).

3. Procédé suivant la revendication 1 ou 2, **caractérisé en ce que**,
- le module CPU ( 2c ) et les deux commandes ( 21, 22 ) d'entrée/sortie sont configurés comme parties constituantes d'un premier appareil ( 2 ) d'automatisation,
- un autre module CPU ( 3c ) et deux autres commandes ( 31, 32 ) d'entrée/sortie sont configurés comme parties constituantes d'un deuxième appareil ( 3 ) d'automatisation et
- respectivement l'une des autres commandes ( 31, 32 ) d'entrée/sortie du deuxième appareil ( 3 ) d'automatisation est câblée annulairement à respectivement l'un des modules ( 41, 42, 51, 52 ) d'interface des périphéries ( 4,5 ) décentralisées et à respectivement l'une des commandes ( 21, 22 ) d'entrée/sortie du premier appareil ( 2 ) d'automatisation.

4. Dispositif d'automatisation comprenant
- des périphéries ( 4, 5 ) décentralisées qui sont pourvues respectivement de deux modules ( 41, 42, 51, 52 ) d'interface,
- un module CPU ( 2c ;3c ) qui est constitué pour accéder en lecture ou en écriture aux périphéries ( 4, 5 ) décentralisées,
- au moins deux commandes ( 21, 22 ; 31, 32 ) d'entrée/sortie qui sont câblées annulairement respectivement à l'un des modules ( 41, 42, 51, 52 ) d'interface des périphéries ( 4, 5 ) décentralisées, le module ( 2c ; 3c ) CPU exécutant les accès aux périphéries par l'un de ces anneaux ( R1, R2 ) ou par les deux anneaux ( R1, R2 ),
- un gestionnaire ( R21, R22 ; R31, R32 ) de redondances pour chaque anneau ( R1, R2 ) qui, en un fonctionnement normal, interrompt logiquement l'anneau ( R1, R2 ) respectif et est constitué en outre pour, dans le cas d'une interruption physique de l'anneau, lever l'interruption logique et lancer une reconfiguration d'anneau pour cet anneau ( R1, R2 ),
dans lequel le dispositif ( 1 ) d'automatisation est constitué pour, dans le cas où la reconfiguration d'anneau pour l'un des anneaux ( R1 ) est lancée, exécuter par l'intermédiaire de l'autre anneau ( R2 ) les accès aux périphéries pour au moins l'une des périphéries ( 4, 5 ) décentralisées.

5. Procédé suivant la revendication 4, **caractérisé en ce que**, dans le cas d'une planification d'un applicateur pour les périphéries ( 4, 5 ) décentralisées, il est prescrit si, dans le cas de l'interruption physique de l'anneau, les accès aux périphéries sont réalisés par l'autre anneau ( R2 ).

6. Procédé suivant la revendication 4 ou 5, **caractérisé en ce que**,
- le module CPU ( 2c ) et les deux commandes ( 21, 22 ) d'entrée/sortie sont des parties constituantes d'un premier appareil ( 2 ) d'automatisation,
- le dispositif ( 1 ) d'automatisation a un deuxième appareil ( 3 ) d'automatisation pourvu d'un module CPU ( 3c ) et de deux commandes ( 31, 32 ) d'entrée/sortie et
- respectivement, l'une des autres commandes ( 31, 32 ) d'entrée/sortie du deuxième appareil ( 3 ) d'automatisation est câblée annulairement ( 2 ) à respectivement l'un des modules ( 41, 42, 51, 52 ) d'interface des périphéries ( 4, 5 ) décentralisées et à respectivement l'une des commandes ( 21, 22 ) d'entrée/sortie du premier appareil d'automatisation.
